# EUROPEAN PATENT SPECIFICATION

(11) **EP 1 496 535 B1**
(45) Date of publication and mention of the grant of the patent: **31.08.2011**
(21) Application number: 02718565.1
(22) Date of filing: 12.04.2002
(51) Int. Cl.: H01H 33/66

(54) **VACUUM VALVE**
VAKUUMRÖHRE
AMPOULE À VIDE

(43) Date of publication of application: 12.01.2005
(73) Proprietor: MITSUBISHI DENKI KABUSHIKI KAISHA, Chiyoda-ku Tokyo 100-8310 (JP)
(72) Inventor: OKAZAWA, Hiroshi, c/o Mitsubishi Denki K.K., Tokyo 100-8310 (JP); SATOU, Toshifumi, c/o Mitsubishi Denki K.K., Tokyo 100-8310 (JP); UENUSHI, Masashi, c/o Mitsubishi Denki K.K., Tokyo 100-8310 (JP); SANO, Kouji, c/o Mitsubishi Denki K.K., Tokyo 100-8310 (JP)
(74) Representative: HOFFMANN EITLE
(86) International application number: PCT/JP2002/003689
(87) International publication number: WO 2003/088290

(56) References cited:
- EP-A1- 0 944 105
- EP-A2- 0 766 277
- EP-A2- 0 866 481
- EP-A2- 1 041 593
- JP-A- 58 176 833
- JP-A- 2000 040 449
- JP-A- 2000 188 046
- JP-A- 2001 126 595
- JP-U- 47 029 547
- JP-Y2- 4 001 624

## Description

### TECHNICAL FIELD

This invention relates to a vacuum valve and, more particularly, to a vacuum valve suitable for use in power distribution station and a vacuum valve assembly in which such vacuum valves for three phase are unitized in a mold resin insulator.

### BACKGROUND ART

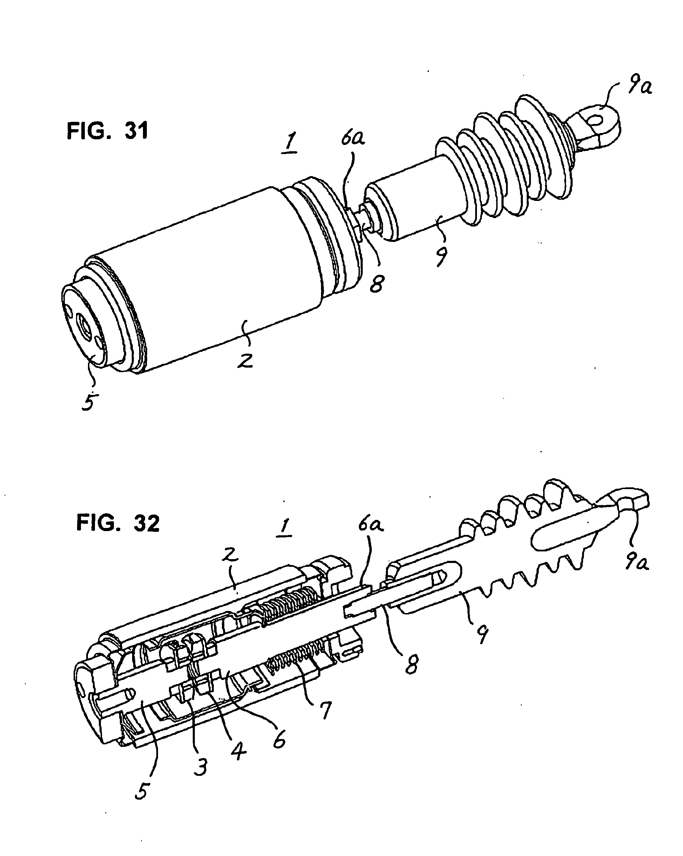

EP 0 944 105 A1 discloses in combination the features of the precharacterizing part of claim 1 below. Figs. 31 and 32 illustrates a relationship between a conventional vacuum valve which is one of unit circuit components constituting a closure-type distribution panel for use in a power distribution station and an insulating rod for operating the vacuum valve. Fig. 31 shows the external appearance of the vacuum valve in a perspective view, and Fig. 32 shows the vacuum valve in a perspective view partially removed along the central axis of the vacuum valve of Fig. 31. In these figures, the vacuum valve 1 comprises an electrically insulating, hollow vacuum vessel 2 closed at both ends, within which a stationary electrode 3 and a movable electrode 4 closely arranged next to each other are provided, and these electrodes 2 and 3 are supported within the vacuum vessel 2 by a stationary side conductor 5 and a movable side conductor, respectively. The movable side conductor 6, which is movably supported and hermetically sealed relative to the vacuum vessel 2 by bellows 7, has an outer end 6a extending externally through the axial end wall of the vacuum vessel 2. The outer end 6a of the movable side conductor 6 has connected thereto one end of a thread-engaged connecting conductor 8 which is a high tension live portion, and the other end of the connecting conductor 8 is thread-engaged and connected to an insulating rod 9, and the insulating rod 9 has connected thereto at its tip end with a connection portion 9a which is a low tension live portion to which an unillustrated switch operating device may be connected. On the other hand, the connecting conductor 8 has connected thereto an unillustrated shunt conductor so that an external circuit (not shown) may be connected. When the insulating rod 9 is driven in the direction of its axis by the unillustrated switch operating device, the movable electrode 4 can be brought into and out of contact with the stationary electrode 3 through the connecting conductor 8 and the movable side conductor 6.

In such conventional vacuum valve 1, the movable side conductor 6 supporting the movable electrode 4 has the outer end 6a outwardly extending through the axial end wall of the vacuum vessel 2. This outer end 6a and the connecting conductor 8 connected thereto are both made of metal and high voltage live portion. Since this high voltage live portion is also a movable portion, it has been disposed in a bare state in air within a distribution board. Therefore, in order to ensure that small animals or the like do not touch the high voltage live portion and bring any malfunctioning in the circuit, it has been necessary to use a mold frame made of an electrically insulating material. Also, when an insulating gas is to be used in the closure type distribution panel, a insulating gas sealing vessel must have been used.

Also, other insulating mold frames at suitable positions and the insulating gas and gas tight vessels have been necessary for providing appropriate electrical insulation between the phases and poles as well as the insulation relative to the ground.

Thus, in the distribution board in which a conventional vacuum valve is used, a high voltage live portion is provided between the vacuum valve and the operating insulating rod in the bare and exposed state, a mold frame and a hermetic vessel must have been used, so that parts must be fixed or welded during the assembly, making the realization of a small-sized distribution board difficult.

### DISCLOSURE OF INVENTION

Accordingly, one object of the present invention is to provide a vacuum valve in which a shunt portion which is a high voltage live portion is completely protected and electrically insulated in order to solve the problems of the conventional vacuum valve discussed above.

Another object of the present invention is to provide a vacuum valve assembly in which a plurality of vacuum valves are arranged in a compact unit.
(1) With the above objects in view, the vacuum valve of the present invention is defined in claim 1 below. The vacuum valve comprises a vacuum vessel, a stationary electrode and a movable electrode disposed within the vacuum vessel, a stationary side conductor hermetically extending through the vacuum vessel and having one end connectable at one end to an external circuit and the other end connected to the stationary electrode, a movable side conductor hermetically extending through the vacuum vessel and having one end connectable at one end to an external circuit and the other end connected to the movable electrode within the vacuum vessel to form a shunt portion, and an insulating rode hermetically extending through the vacuum vessel and having one end connected to the movable electrode within the vacuum vessel and the other end connectable externally of the vacuum vessel to a switch operating device.
(2) The vacuum vessel may have a substantially cylindrical shape and may be coupled at one axial end thereof to the stationary side conductor and coupled at the other axial end to the insulating rod by means of bellows, and the movable side conductor may comprise an external connecting conductor extending through a circumferential wall of the vacuum vessel and a flexible conductor connected to the movable electrode.
(3) According to the invention, the vacuum valve comprises a mold resin insulator surrounding the vacuum vessel, a stationary side terminal including a stationary side terminal conductor embedded within the mold resin insulator and connected to the stationary side conductor and a movable side terminal including a movable side terminal conductor embedded within the mold resin insulator and connected to the movable side conductor.
(4) According to the invention, the stationary side terminal and the movable side terminal each define a convex portion or a concave portion relative to an outer surface of the mold resin insulator, the convex portion and the concave portion are in an axially aligned, complementary relationship and each has a substantially truncated conical configuration including a surface shape capable of establishing an interface insulation therebetween.
(5) The mold resin insulator may have a concave portion having an inner circumferential surface surrounding the insulating rod in a spaced apart relationship.
(6) Three of the vacuum valves may be arranged side by side in parallel to each other, and the mold resin insulator may be a single, substantially rectangular parallelopiped mold resin insulator common to the three vacuum valves.
(7) The vacuum valve assembly may also comprise a vacuum valve as defined in claim 1 and a switching operating device for driving the vacuum valve. The vacuum valve comprises a vacuum vessel, a stationary electrode and a movable electrode disposed within the vacuum vessel, a stationary side conductor hermetically extending through the vacuum vessel and having one end connectable at one end to an external circuit and the other end connected to the stationary electrode, a movable side conductor hermetically extending through the vacuum vessel and having one end connectable at one end to an external circuit and the other end connected to the movable electrode within the vacuum vessel to form a shunt portion, and an insulating rode hermetically extending through the vacuum vessel and having one end connected to the movable electrode within the vacuum vessel and the other end connectable externally of the vacuum vessel to a switch operating device, and the switching operating device may be connected to the insulating rod and may have a substantially rectangular parallelopiped outer shape having a projected configuration in the direction of axis of the vacuum valve substantially the same as that of the vacuum valve.
(8) Three of the vacuum valve assemblies may be arranged side by side in parallel to each other, the switching operating device may be connected to the insulating rod and may have a substantially rectangular parallelopiped outer shape having a projected configuration in the direction of axis of the vacuum valve substantially the same as that of the three vacuum valves.
(9) The mold resin insulator may be a single, substantially rectangular parallelopiped mold resin insulator common to the three vacuum valves, and the switching opening device connected to the insulating rod may be substantially rectangular parallelopiped independently connected to the three vacuum valves, respectively.
(10) The mold resin insulator may be a single, substantially rectangular parallelopiped mold resin insulator common to the three vacuum valves, and the switching opening device connected to each of the insulating rods may include a common, substantially rectangular parallelopiped housing.
(11) The switching operating device may be disposed along the vacuum valve, and the provision may be made of an inter-phase link connected between the switching operating device and the vacuum valve for transmitting a drive force from the switching operating device to the vacuum valve in each phase.
(12) A vacuum valve assembly may further comprise a switching operating device connected to the insulating rod, a single substantially rectangular parallelopiped mold resin insulator surrounding the vacuum vessel and the switching operating device, a stationary side terminal embedded in the mold resin insulator and having a stationary side terminal conductor connected to the stationary side conductor, and a movable side terminal embedded in the mold resin insulator and connected to the movable side conductor.
(13) Three of the vacuum valves may be arranged side by side side by side in parallel to each other, and the mold resin insulator may be a single, substantially rectangular parallelopiped mold resin insulator common to the three vacuum valves.

### BRIEF DESCRIPTION OF THE DRAWINGS

Fig. 1 is a perspective view showing an outer appearance of the vacuum valve of the present invention in which the shunt portion is accommodated within the vacuum vessel.
Fig. 2 is a perspective view cut away along the central axis of the vacuum valve.
Fig. 3 is a perspective view showing an outer appearance of the vacuum valve of the present invention in which the vacuum valve is embedded within the mold resin insulator.
Fig. 4 is a perspective view cut away along the axis of the vacuum valve shown in Fig. 3.
Fig. 5 is a perspective view showing an outer appearance of the vacuum valve of the present invention in which three of the vacuum valves shown in Fig. 1 for phases are embedded as a unit within the mold resin insulator.
Fig. 6 is a perspective cut-away view of the vacuum valve shown in Fig. 5.
Fig. 7 is a perspective view showing an outer appearance of the vacuum valve assembly of the present invention in which the vacuum valves shown in Fig. 3 have connected thereto a switching operating device.
Fig. 8 is a perspective view cut away along the axis of the vacuum valve shown in Fig. 7.
Fig. 9 is a perspective view showing an outer appearance of the vacuum valve of the present invention in which three of the vacuum valves assemblies shown in Fig. 7 having the switch operating device connected thereto for phases are arranged side by side side by side in parallel.
Fig. 10 is a perspective view cut away along the axis of the vacuum valve assembly shown in Fig. 9.
Fig. 11 is a perspective view showing an outer appearance of the vacuum valve assembly of the present invention in which the vacuum valves shown in Fig. 3 are arranged side by side side by side in parallel and have connected thereto a common switching operating device.
Fig. 12 is a perspective cut-away view of the vacuum valve assembly shown in Fig. 11.
Fig. 13 is a perspective view showing an outer appearance of the vacuum valve assembly of the present invention in which a switching operating device is connected to each phase of the vacuum valves shown in Fig. 5.
Fig. 14 is a perspective cut-away view of the vacuum valve assembly shown in Fig. 13.
Fig. 15 is a perspective view showing an outer appearance of the vacuum valve assembly of the present invention in which a switching operating device is connected to the vacuum valves shown in Fig. 5.
Fig. 16 is a perspective cut-away view of the vacuum valve assembly shown in Fig. 15.
Fig. 17 is a perspective view showing an outer appearance of the vacuum valve assembly of the present invention in which a common switching operating device is connected to three of the vacuum valves shown in Fig. 5 arranged side by side side by side in parallel for phases.
Fig. 18 is a perspective cut-away view of the vacuum valve assembly shown in Fig. 17.
Fig. 19 is a perspective view showing an outer appearance of the vacuum valve assembly of the present invention in which a common switching operating device is connected to the vacuum valves shown in Fig. 5. by means of mutual linkage.
Fig. 20 is a perspective cut-away view of the vacuum valve assembly shown in Fig. 19.
Fig. 21 is a perspective view showing an outer appearance of the vacuum valve assembly of the present invention in which a common switching operating device is connected to the vacuum valves shown in Fig. 1 and embedded within the mold resin insulator.
Fig. 22 is a perspective cut-away view cut away along the central axis of the vacuum valve assembly shown in Fig. 21.
Fig. 23 is a perspective view showing an outer appearance of the vacuum valve assembly of the present invention in which a common switching operating device is connected to the vacuum valves shown in Fig. 1 and arranged side by side side by side in parallel for phases and embedded within the common mold resin insulator.
Fig. 24 is a perspective cut-away view of the vacuum valve assembly shown in Fig. 23.
Fig. 25 is a view illustrating a modification of the vacuum valve shown in Figs. 3 and 4.
Fig. 26 is a view illustrating a another modification of the vacuum valve shown in Figs. 3 and 4.
Fig. 27 is a view illustrating a still another modification of the vacuum valve shown in Figs. 3 and 4.
Fig. 28 is a view illustrating a modification of the vacuum valve shown in Figs. 11 and 12.
Fig. 29 is a view illustrating another modification of the vacuum valve shown in Figs. 11 and 12.
Fig. 30 is a view illustrating a still another modification of the vacuum valve shown in Figs. 11 and 12.
Fig. 31 is a view illustrating the conventional the vacuum valve in which the shunt portion is exposed to exterior of the vacuum vessel. Figs. 3 and 4.
Fig. 32 is a cut-away view along the axis of the vacuum valve shown in Fig. 31.

### BEST MODE FOR CARRYING OUT THE INVENTION

### Embodiment 1

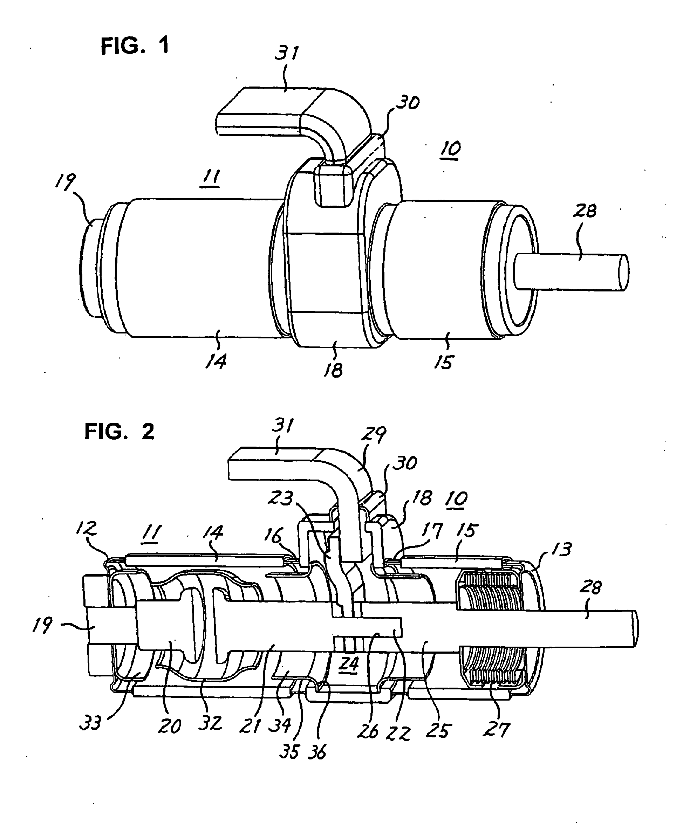

Figs. 1 and 2 illustrate an embodiment of a vacuum valve of the present invention, and Fig. 1 is a perspective view showing an outer appearance of the vacuum valve of the present invention in which the shunt portion is accommodated within the vacuum vessel, and Fig. 2 is a perspective view cut away along the central axis of the vacuum valve.

In these figures, the vacuum valve 10 comprises a hollow, hermetic and substantially cylindrical vacuum vessel 11, and the vacuum vessel 11 comprises a pair of metallic circular end plates 12 and 13, two cylindrical, ceramic insulating tubes 14 and 15 secured to the end plates 12 and 13 at positions axially separated from each other, and a substantially oval (track-like shape) cylindrical ceramic insulating box 18 connected by sleeves 16 and 17 by welding or the like between the insulating tubes 14 and 15.

The first end plate 12 of the vacuum vessel 11 has secured thereto a stationary side conductor 19 that extends through the end plate 12 in axial alignment with the vacuum vessel 11, and the inner end of the stationary side conductor 19 has secured thereto a stationary electrode 20 in an axially aligned relationship. A movable electrode 21 is disposed in an opposing and separable relationship to the stationary electrode 20 to constitute a pair of separable electrodes. The movable electrode 21 has at the other end thereof a small diameter portion 22, to which one end of a flexible conductor 23 or a shunt which will be described in detail later is fitted and connected to constitute a shunt portion 24. To this small-diameter portion 22, a central bore 26 disposed at the inner end of the insulating rod 25 is also firmly connected so that the movable electrode 21 and the insulating rod 25 acts as a one piece, unitary rigid rod-like member. To an intermediate portion of the insulating rod 25 has sealingly connected thereto an inner end (inner circumference) of bellows 27, which is sealingly connected at its outer circumference to the circumferential wall of the vacuum vessel 11, and the outer end 28 of the insulating rod 25 extends outwardly of the second end plate 13 of the vacuum vessel 11 so that it can be connected to an unillustrated switching operating device.

The other end of the flexible conductor 23 connected to the shunt portion 24 between the movable electrode 21 and the insulating rod 25 is connected to and supported by an external connection conductor 29. The external connection conductor 29 is bent into a substantially L-shape, with one of leg portions extended in the radial direction to extend into the ceramic insulating box 18 where it is connected to the flexible conductor 23. This leg portion is also welded to a metal seal member 30 welded to the insulating box 18 so that it is hermetically sealed and at the same time mechanically supported. The other leg portion extends substantially side by side side by side in parallel to the central axis of the vacuum vessel 11 so that it can be connected to an unillustrated external circuit. Thus, the flexible conductor 23 and the external connection conductor 29 together constitute a movable side conductor 31 corresponding to the stationary side conductor 19. Also, the stationary side conductor 19 and the movable side conductor 31 extend sealingly through the vacuum vessel 11 and constitute the conductors each connected to the movable electrode 20 and the stationary electrode 21.

Disposed within the vacuum vessel 11 to surround the stationary electrode 20 and the movable electrode 21 with a space therebetween is a substantially barrel-shaped shield 32 for electric field relaxation and prevention of metallic vapor scattering. A substantially dish-shaped shield 33 for similar field relaxation purpose is provided within the vacuum vessel 11 and at the first end plate 12. Also, a pair of substantially cylindrical shields 34 for field relaxation is weld attached to the inner surface of the insulating box 18 so they surround the shunt portion 24 which is a connection portion between the movable electrode 21 and the flexible conductor 23. The shield 34 each is a metal member including a cylindrical portion 35 respectively axially surrounding the movable electrode 21 or the insulating rod 25, and a flange portion 36 gradually bent radially outwardly from the end portion of the cylindrical portion 35 on the side of the flexible conductor 23.

Thus, in the vacuum valve 10 of the present invention illustrated in Figs. 1 and 2, the shunt portion 24 is disposed within the vacuum vessel 11, the insulating rod 25 extends through the end wall of the vacuum vessel 11 while maintaining the seal by means of the bellows 27, and the movable side conductor 31 sealingly extends through the circumferential wall of the vacuum vessel 11. Therefore, the live portion of the vacuum valve is not exposed, so that there is no need to use an insulating resin mold frame and to fill the closure type distribution board with an electrically insulating gas.

### Embodiment 2

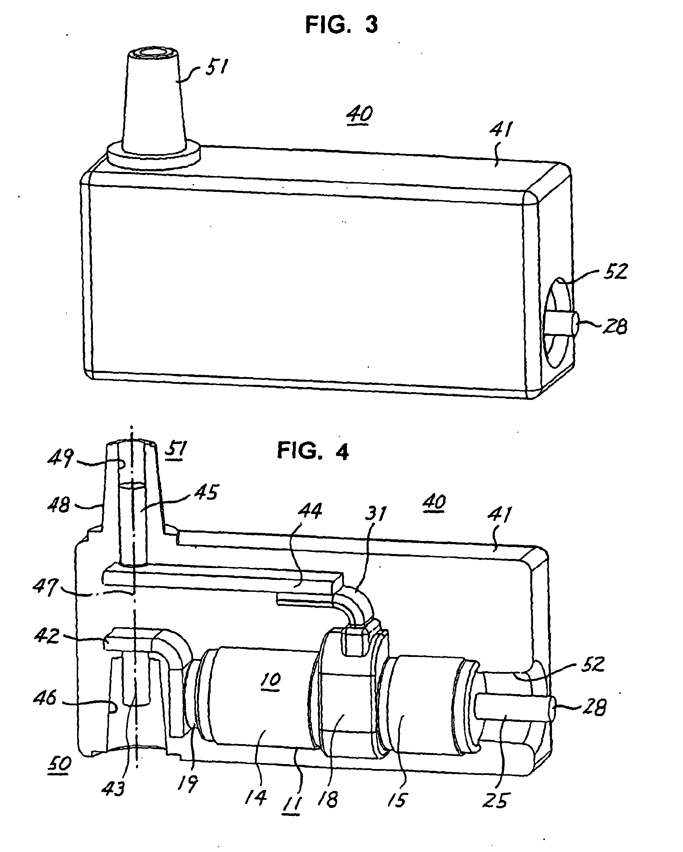

Figs. 3 and 4 illustrate a vacuum valve 40 of another embodiment of the present invention. Fig. 3 shows an outer appearance of the vacuum valve 40 of the present invention in which the vacuum valve 10 shown in Fig. 1 as described above is embedded within a mold resin insulator 41, and Fig. 4 shows the vacuum valve 40 shown in Fig. 3 in a perspective view cut away along its axis.

In these figures, the vacuum valve 40 comprises a vacuum valve 10 shown in Figs. 1 and 2, a stationary side connecting conductor 42 connected to the stationary side conductor 19 of the vacuum valve 10, a stationary side terminal conductor 43 connected to the stationary side connecting conductor 42, a movable side connecting conductor 44 connected to the movable side conductor 31 of the vacuum vessel 11, a movable side terminal conductor 45 connected to the movable side connecting conductor 44, and a mole resin insulator 41 made of a suitable material such as epoxy resin for embedding to support and electrically insulating these components relative to the exterior.

While the mold resin insulator 41 as a hole is column-shaped and has a rectangular parallelopiped configuration in the illustrated embodiment, the mold resin insulator 41 has a substantially truncated conical concave portion 46 formed from its surface (bottom surface in Fig. 4). From the bottom of the concave portion 46, a substantially cylindrical stationary side terminal conductor 43 projects in the axial direction to extend up to substantially half the depth of the concave portion 46. Also, on the opposite surface (top surface in Fig. 4) of the mold resin insulator 41, a substantially truncated conical convex portion 48 extending coaxially with the axis 47 of the concave portion 46 (i. e., the axis 47 of the stationary side terminal 43) and the convex portion 48 has a substantially cylindrical movable side terminal conductor 45 coaxially disposed therein. The movable side terminal conductor 45 extends up to half the height of the convex portion 48 and a cavity 49 of a diameter substantially equal to that of the movable side terminal conductor 45 at the tip portion of the movable side terminal conductor 45.

Thus, in the illustrated example, the stationary side terminal conductor 43 and the truncated conical concave portion 46 together constitute a stationary side terminal 50 of the vacuum valve 40 and the movable terminal conductor 45 and the truncated conical convex portion 48 together constitute a movable side terminal 51. The stationary side terminal 50 and the movable side terminal 51 are complementary in shape and dimension to each other. That is, a plurality of vacuum valves similar to the vacuum valve 40 shown in Fig. 2 are to be vertically stacked and electrically connected to each other, the convex portion 48 of the movable side terminal 51 of the upper vacuum valve 40 can be inserted into the concave portion 46 of the stationary side terminal 50 of the lower vacuum valve 40. When the movable side terminal 50 is thus inserted into the stationary side terminal 51, the inner circumference surface of the concave portion 46 and the outer circumference surface of the convex portion 48 are brought into an intimate contact with each other with substantially no gap therebetween, whereby the interface insulation can be realized, the relative movement therebetween can be prevented and, at the same time, the stationary side terminal conductor 43 and the movable side terminal conductor 45 are brought into an intimate contact with each other to establish a good electrical connection therebetween.

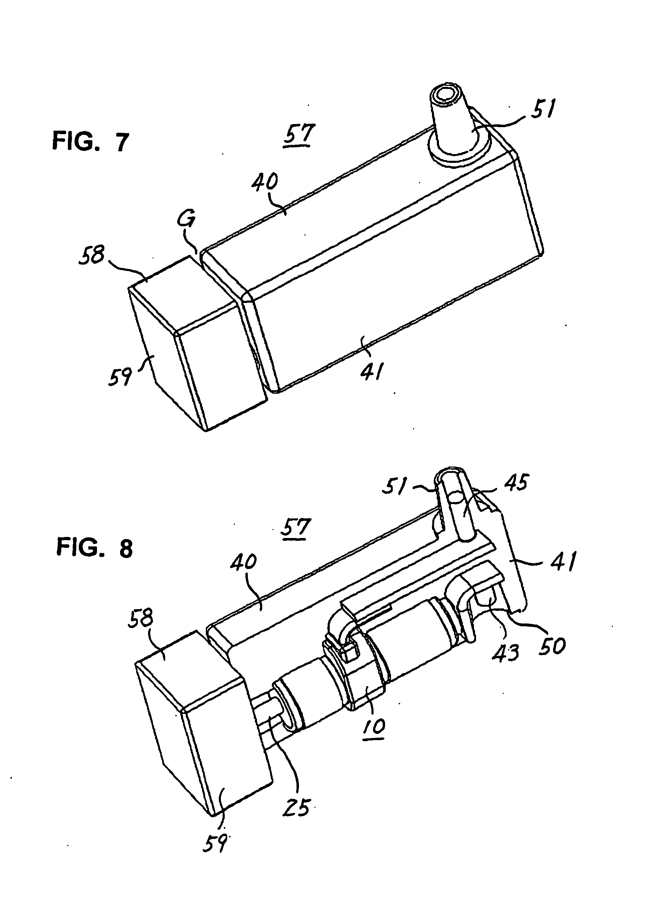

The mold resin insulator 41 also has formed therein a concave portion 52 having a cylindrical inner surface surrounding and spaced apart from the outer end 28 of the insulating rod 25 projecting from the cylindrical insulating tube15 of the vacuum valve 40. The outer end 28 of the insulating rod 25 may be connected, through the use of this concave portion 52, to an unillustrated known switching operating device or a switching operating device as illustrated and described later in detail in conjunction with Fig. 7.

According to the vacuum valve 40 of the present invention shown in Figs. 3 and 4, the stationary side terminal conductor 19 of the vacuum valve 10 is connected to the stationary side terminal conductor 43 by means of the stationary side connecting conductor 42 and the movable side terminal conductor 31 is connected to the movable side terminal conductor 45 by means of the movable side connecting conductor 44, and these components are embedded within the mold resin insulator 41. Therefore, the mold frame made of an insulating material heretofore required for establishing the insulation between phases, the insulation to the ground and the insulation between the poles is not necessary and the insulating gas and the hermetic vessel therefor are also not necessary anymore, so that the power distribution substation such as distribution board can be made small-sized.

### Embodiment 3

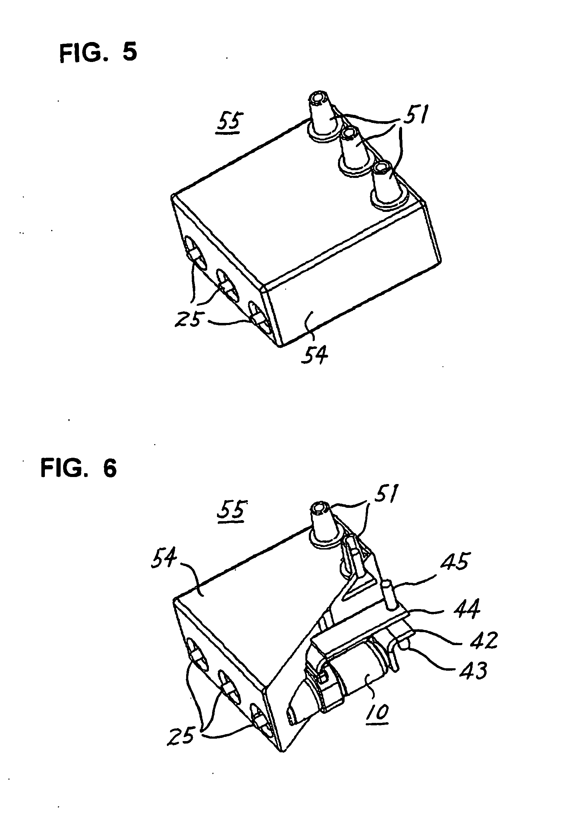

Figs. 5 and 6 illustrate a vacuum valve 55 of another embodiment of the present invention. Fig. 5 is a perspective view showing an outer appearance of the vacuum valve 55 of the present invention in which three of the vacuum valves 10 shown in Fig. 1 for phases are embedded as a unit within a mold resin insulator 54 of a substantially rectangular parallelopiped configuration, and Fig. 6 is a perspective cut-away view of the vacuum valve 55 shown in Fig. 5. The vacuum valve 55 comprises three vacuum valves 10 shown in Figs. 1 and 2 arranged side by side side by side in parallel to each other and a single mold resin insulator 56 similar to the mold resin insulator 41 shown in Figs. 3 and 4 but common to three vacuum valves 10.

Thus, according to the embodiment of the vacuum valve of the present invention shown in Figs. 5 and 6, since the vacuum valve 55 is of the three-phase-in-one type in which the valves are embedded in a substantially rectangular parallelopiped, single mold' resin insulator 54, the number of the parts is small and the handling is easy and, more over, the power distribution substation such as power distribution board can be made significantly smaller than that that uses the vacuum valve 40 shown in Figs. 3 and 4.

### Embodiment 4

Figs. 7 and 8 illustrate a vacuum valve assembly 57 of still another embodiment of the present invention in which the vacuum valve 40 shown in Figs. 3 and 4 are connected to a switching operating device 58 to compose an assembly of the vacuum valve 40 and the switching operating device 58. Fig. 7 is a perspective view showing an outer appearance of the vacuum valve assembly 57 and Fig. 8 is a perspective view cut away along the axis of the vacuum valve assembly 57 shown in Fig. 7. The vacuum valve 40 and the switching operating device 58 are secured to a structural member of the unillustrated closure type distribution board so that the illustrated relationship is maintained between the components. There is formed a small gap G in the axial direction between the housing 59 of the switching operating device 58 and the mold resin insulator 41 of the vacuum valve 40, and the switching operating device 58 has a substantial rectangular parallelopiped configuration exhibiting a projection shape substantially the same as that in the axial direction of the vacuum valve 40 (the shape of the mold resin insulator 41 as seen in the direction of axis of the vacuum valve 40). Therefore, the vacuum valve assembly 57 which is a combination of the switching operating device 58 and the vacuum valve 40 can be handle as if it were a single rectangular parallelopiped member. While the drive mechanism in the switching operating device 58 may be a mechanical drive unit in which a spring force charged by an electric motor is utilized, the housing 59 is only required to be provided on its outer surface with electric terminals for supplying power irrespective of whether or not the mechanical or electromagnetic drive unit is used.

According to the vacuum valve assembly 57 illustrated in Figs. 7 and 8, the molded switching operating device 58 and the molded vacuum valve 40 are connected to form a substantially integral, one-unit combination, so that there is no need to achieve the assembly adjustment and the installation into the power distribution board is easy.

### Embodiment 5

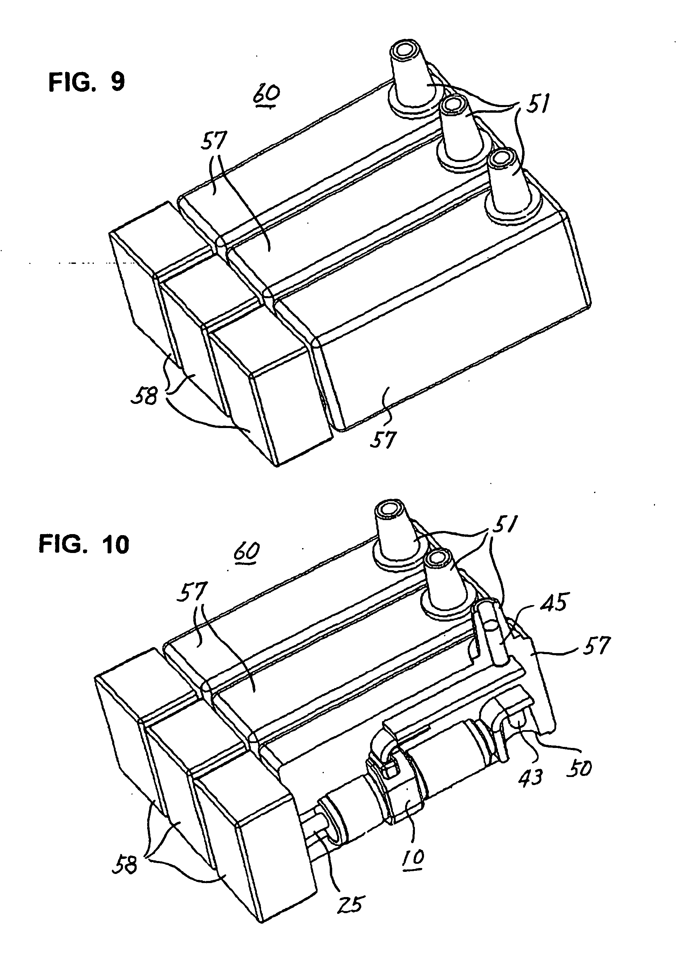

The vacuum valve assembly 60 illustrated in Figs. 9 and 10 is the one in which the three vacuum valve 57 shown in Figs. 7 and 8 are arranged with a suitable gap defined therebetween. The vacuum valve assembly 60 is arranged and supported within the unillustrated distribution board as described to exhibit a rectangular parallelopiped overall configuration. Of course, a suitable spacer, a belt-like member or tie rods or the like (not shown) may be used to combine three of the valves to form a three-phase-in-one type vacuum valve.

Thus, the vacuum valve assembly 60 shown in Figs. 9 and 10 has a compact overall outer configuration because the vacuum valve assemblies 57 for three phases equipped with the switching operating device 58 are arranged side by side side by side in parallel.

### Embodiment 6

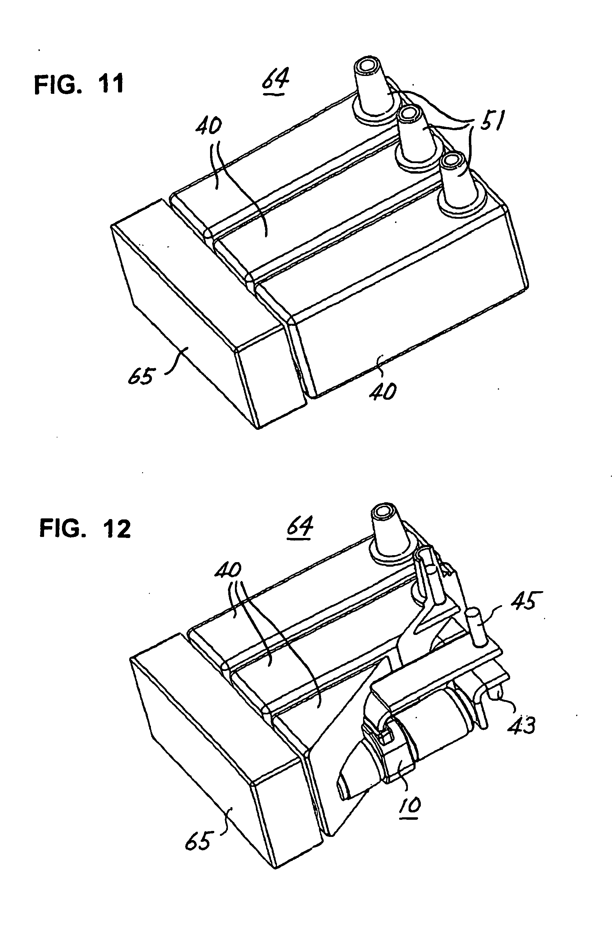

The vacuum valve assembly 64 illustrated in Figs. 11 and 12 is the one in which the three vacuum valve 40 shown in Figs. 3 and 4 are arranged side by side in parallel to each other and includes a single, common switching operating device 65 connected to three insulating rods 25 of the vacuum valve 40 and molded within the mold resin insulator. The switching operating device 65 has an outer shape of a substantially rectangular parallelopiped and has an axial projection shape substantially the same as the contour of the three parallel-arranged vacuum valves 40. The common switching operating device 65 is provided therein with an inter-phase linkage for interlocking for similar operation of the drive mechanism (not shown) of the switching operating device 65 for the respective phases. Three vacuum valves 40 and the common switching operating device 65 are thus combined to exhibit as a whole a rectangular parallelpiped configuration.

Thus, the vacuum valve assembly 64 shown in Figs. 11 and 12 has a compact overall outer configuration because the vacuum valve assemblies 60 for three phases equipped with the switching operating device 57 are arranged side by side in parallel. Also, since the switching operating device 65 is of a rectangular parallelopiped configuration embedded within the single common mold resin insulator and the vacuum valve assembly 64 exhibits a rectangular parallelopiped overall configuration, so that the arrangement and the installation within the distribution board is easy and the general configuration is compact.

### Embodiment 7

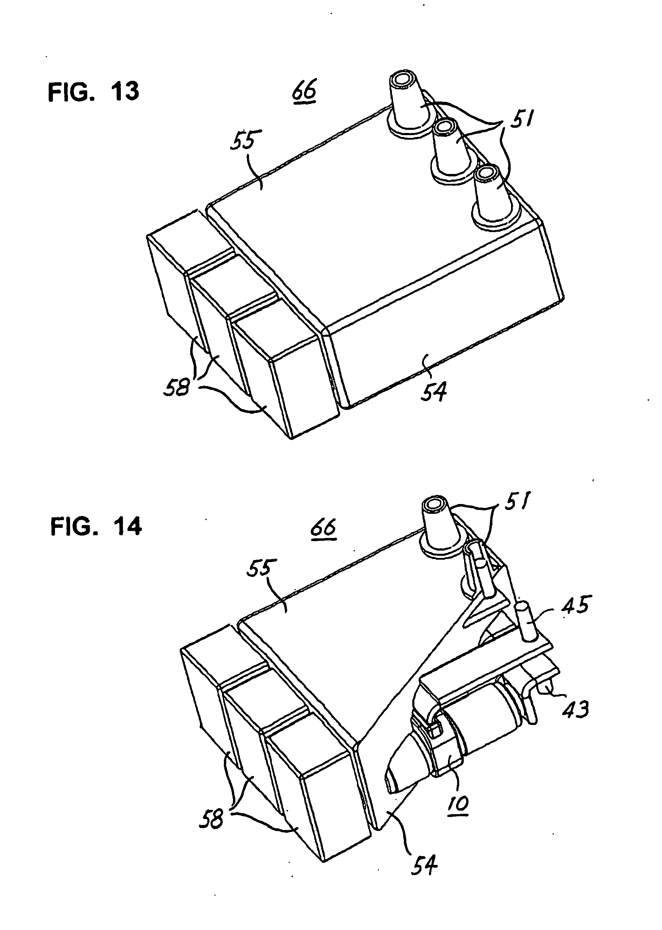

A vacuum valve assembly 66 shown in Figs. 13 and 14 comprises a vacuum valve 55 in which three vacuum valves 10 shown in Figs. 5 and 6 are embedded within a single common mold resin insulator 54, and three independent switching operating devices 58 connected to the respective vacuum valves 10. The outer shapes of each of the switching operating devices 58 are of a substantially rectangular parallelopiped configuration same as that shown in Figs. 9 and 10 and similarly arranged. The vacuum valve 55 and three switching operating devices 58 are thus combined and provide a rectangular parallelopiped configuratin as a whole.

Since the vacuum valve assembly 66 illustrated in Figs. 13 and 14 is the one in which the three-phase-in-one type vacuum valve assembly 55 is connected to the switching operating devices 58, the outer configuration of the vacuum valve assembly 60 as a whole can be made compact. Also, the switching operating device 65 is of a rectangular parallelopiped configuration covered in a common, single mold resin insulator and the vacuum valve assembly 66 is of a rectangular parallelopiped configuration as a whole, so that the arrangement and the installation within the distribution board is easy and the general configuration is compact.

### Embodiment 8

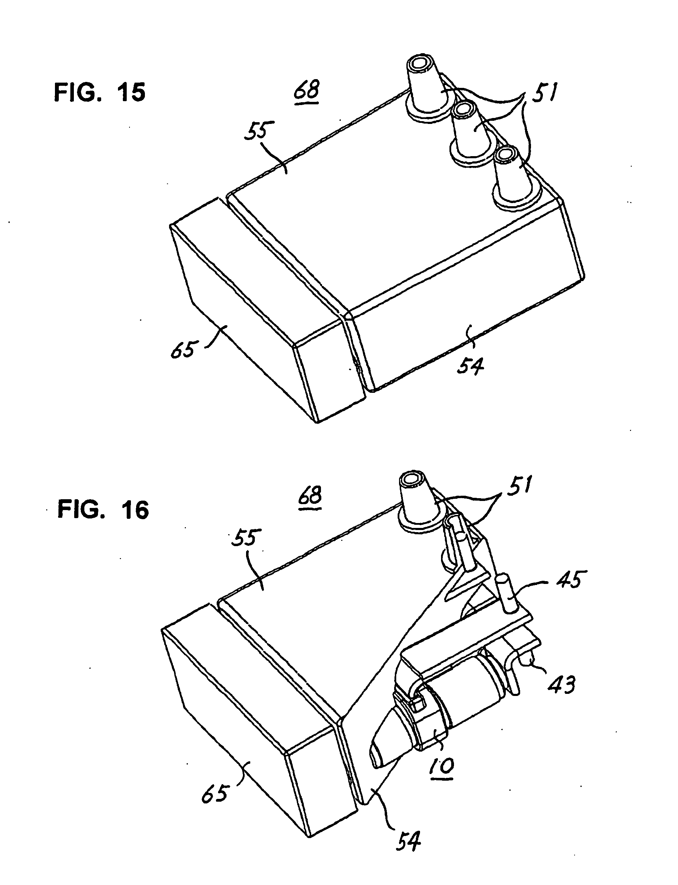

The vacuum valve assembly 68 illustrated in Figs. 15 and 16 is the one in which the vacuum valve 55 including three vacuum valves 10 covered by a common, single mold resin insulator in a similar manner to that shown in Figs. 5 and 6 is connected to a switching operating device 65 including a common, single substantially rectangular parallelopiped housing similar to that shown in Figs. 11 and 12. In this vacuum valve assembly 68 also, the vacuum valve 55 and the switching operating device 65 are combined to provide a general configuration of a rectangular prallelopiped configuration.

Thus, the vacuum valve assembly 68 shown in Figs. 15 and 16 includes the switching operating device 65 and is arranged to exhibit a generally rectangular prallelopiped configuration, so that the arrangement and the installation within the distribution board is easy and the general configuration is compact.

### Embodiment 9

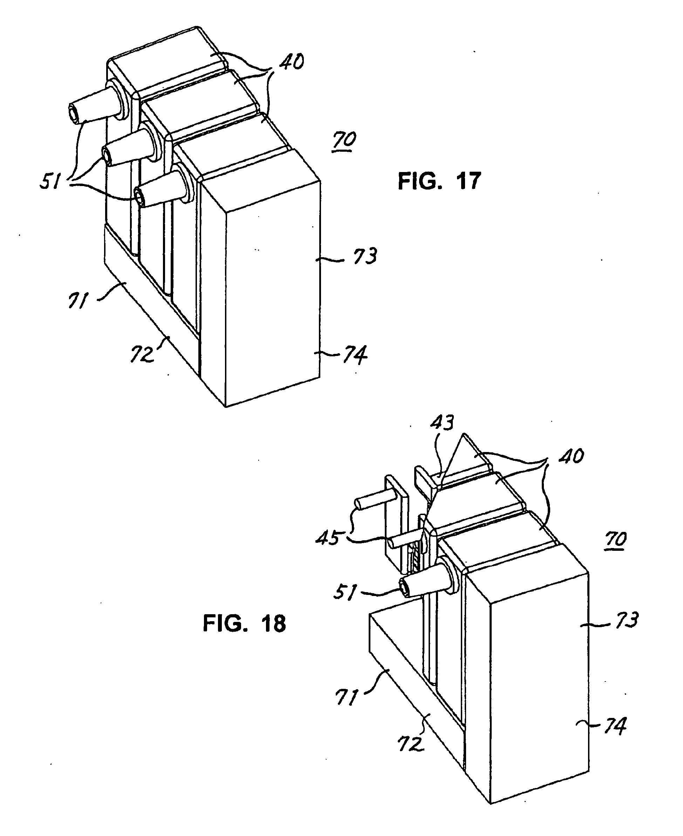

In a vacuum valve assembly 70 shown in Figs. 17 and 18, three vacuum valves 40 shown in Figs. 3 and 4 are arranged side by side in parallel to each other, and the insulating rod 25 (Fig. 4) of each vacuum valve 40 is connected an inter-phase link 72 embedded within a single resin insulator 71 of a substantially rectangular parallelopiped configuration in order to actuate the respective phases in unison. The inter-phase link 72 is connected to a switching operating device 73 positioned adjacent to a side of the vacuum valve 40, and the switching operating device 73 includes a substantially rectangular parallelopiped mold resin insulator 74.

The mold resin insulator 71 of the inter-phase link 72 and the mold resin insulator 74 of the switching operating device 73 together define a contour substantial continuous to the vacuum valves 40 for three phases to define as a whole a vacuum valve assembly 70 of a rectangular parallelopiped configuration. The drive force from the switching operating device 73 is transmitted to the vacuum valves 40 through the inter-phase link 72.

Since the vacuum valve assembly 70 illustrated in Figs. 17 and 18 is the one in which the vacuum valves 40, the inter-phase link 72 and the switching operating devices 73 define a substantially continuous outer contour to provide the vacuum valve assembly 70 of a rectangular parallelopiped configuration as a whole, so that the arrangement and the installation within the distribution board is easy and the general configuration is compact.

### Embodiment 10

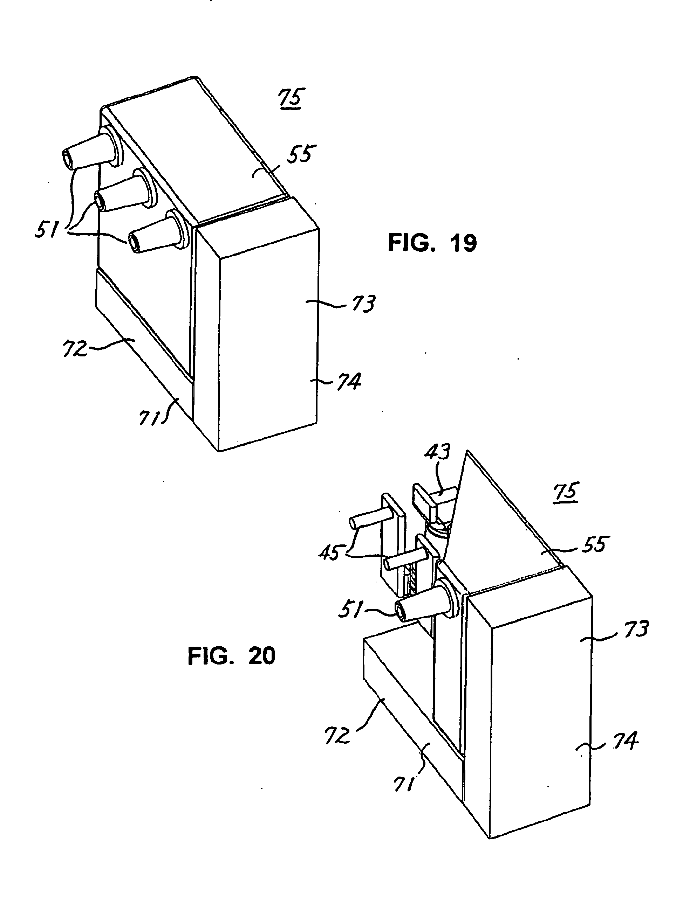

In a vacuum valve assembly 75 shown in Figs. 19 and 20, the inter-phase link 72 and the switching operating device 73 shown in Figs. 17 and 18 are employed together with the three-phase-in-one type vacuum valve 55 in which three vacuum valves 10 are embedded together in the single mold resin insulator 54 as shown in Figs. 5 and 6. In this vacuum valve assembly 75 also, the mold resin insulator 71 of the inter-phase link 72 and the mold resin insulator 74 of the switching operating device 73 define an outer contour substantially continuous to the three-phase-in-one type vacuum valve 55 to exhibit a generally rectangular parallelopiped configuration.
the switching operating device 73 includes a substantially rectangular parallelopiped mold resin insulator 74.

Since the vacuum valve assembly 75 illustrated in Figs. 19 and 20 is the one in which the vacuum valves 55, the inter-phase link 72 and the switching operating devices 73 define a substantially continuous outer contour to provide the vacuum valve assembly 75 of a rectangular parallelopiped configuration as a whole, so that the arrangement and the installation within the distribution board is easy and the general configuration is compact.

### Embodiment 11

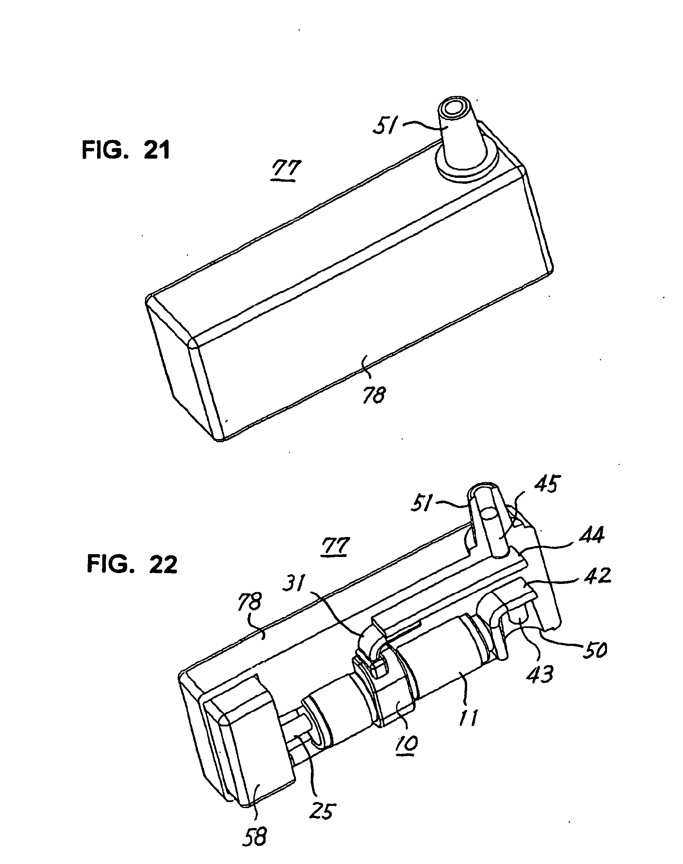

A vacuum valve assembly 77 illustrated in Figs. 21 and 22 is the one in which the vacuum valve 10 shown in Figs. 1 and 2 is embedded in a single mold resin insulator 78 of a substantially rectangular prallelopiped configuration together with the switching operating device 58 shown in Figs. 7 and 8. That is, in this vacuum valve assembly 77, the insulating rode 25 of the vacuum valve 10 has connected thereto the switching operating device 58 molded in a mold resin insulator such as epoxy resin so that the vacuum valve assembly 77 can be operated by the switching operating device 58. The single, substantially rectangular parallelopiped mold resin insulator 78 surrounding the vacuum vessel 11 of the vacuum valve 10 and the switching operating device 58 is also made of a suitable organic insulating material such as epoxy resin. Within the mold resin insulator 78, similarly to the example illustrated in Figs. 3 and 4, there are provided the stationary side terminal 50 including the statinary side terminal conductor 43 connected to the stationary side conductor 19 by means of the stationary side connecting conductor 42, and the movable side terminal 51 including the movable side terminal conductor 45 connected to the movable side conductor 31 by means of the movable side connecting conductor 44.

Thus, the vacuum valve assembly 77 illustrated in Figs. 21 and 22 is the one in which the vacuum valve 10 equipped with the switching operating device 58 as a whole is molded within a mold resin insulator 78, so that the degree of completion as a vacuum valve assembly is high, the arrangement and the installation within the distribution board is easy and the general configuration is compact.

### Embodiment 12

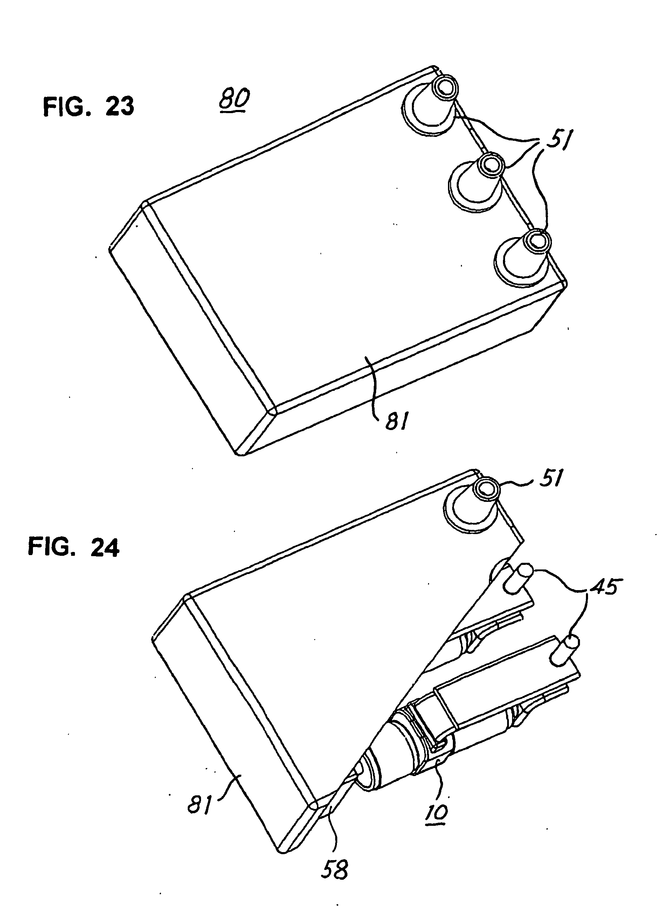

The vacuum valve assembly 80 illustrated in Figs. 23 and 24 is similar to the one in which three of the vacuum valves 77 shown in Figs. 21 and 22 are arranged side by side in parallel, but the mold resin insulator is different in that it is not three separate member but a single, substantially rectangular parallelpiped mold resin insulator 81 common to three vacuum valves 10.

Thus, the vacuum valve assembly 80 illustrated in Figs. 23 and 24 has a degree of completion as a vacuum valve assembly still higher than the vacuum valve assembly 77 shown in Figs. 21 and 22, so that the arrangement and the installation within the distribution board is easy and the general configuration is compact.

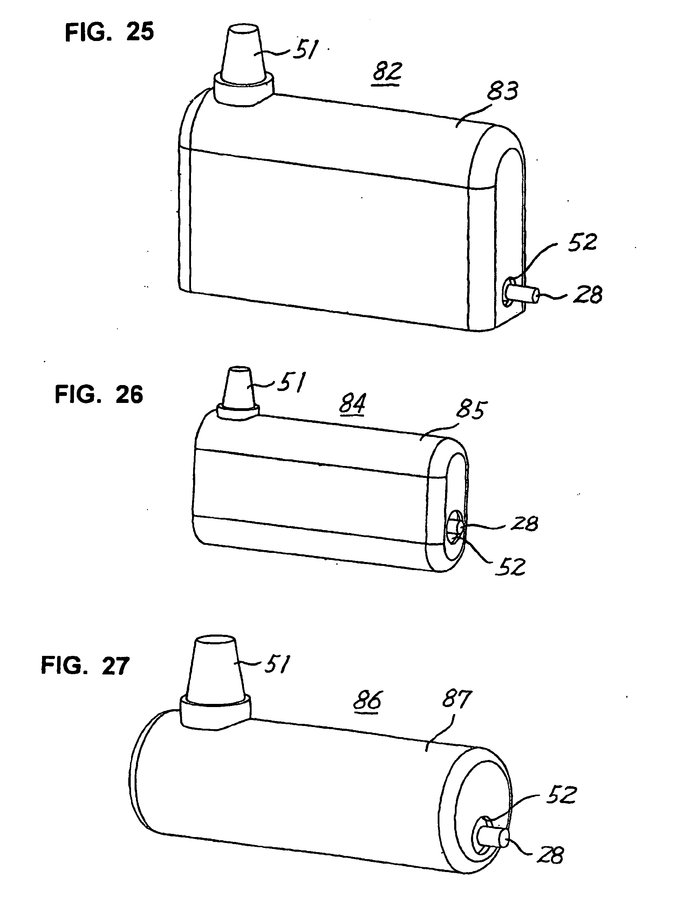

Figs. 25 to 30 inclusive illustrate various modifications of the mold resin insulator for the vacuum valve or the vacuum valve assembly. While the mold resin insulators in the previous embodiments have heretofor been explained as having a substantially rectangular parallelopiped configuration, it is to be noted that the mold resin insulator may have any suitable configuration other than a rectangular parallelopiped configuration such as columns of various cross section, some of such examples are illustrated in Figs. 25 to 30.

The vacuum valves illustrated in Figs. 25 to 27 inclusive have a structure similar to the vacuum valve 40 shown in Figs. 3 and 4, but only the configuration of the mold resin insulator is different. In Fig. 25, the mold resin insulator 83 of the vacuum valve 82 has a configuration that can be referred to as the nissen-hut type in which a half cylinder member is placed on a rectangular parallelopipe member. In Fig. 26, the vacuum valve 84 has a mold resin insulator 85 that can be referred to as the scutum-like shape in which a half cylinder is attached to top and bottom of the rectangular parallelopipe member. In Fig. 27, the vacuum valve 86 has a mold resin insulator 87 of a cylinder having a circular cross section.

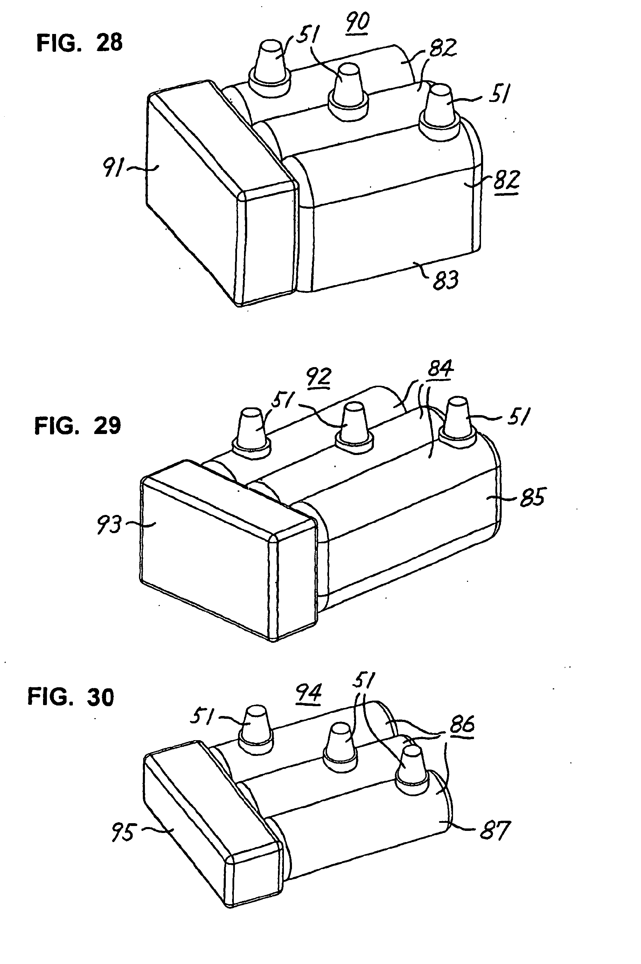

The vacuum valve assembly illustrated in Figs. 28 to 30 inclusive have structures similar to those shown in Figs. 11 and 12, but the shapes of the mold resin insulators are different. In other words, in the vacuum valve assembly 64 shown in Figs. 11 and 12, the vacuum valve 40 is replaced with the vacuum valves 82, 84 and 86 shown in Figs. 25 to 27 inclusive. That is, the vacuum valve assembly 90 shown in Fig. 28 comprises three vacuum valves 82 including the nissen-hut type mold resin insulator and the switching operating device 91 has a larger height corresponding to the height of the mold resin insulator 83 so that it has an axial projection shape substantially the same as a general contour of the three vacuum valves 82 arranged side by side. In Fig. 29, the vacuum valve assembly 92 comprises three vacuum valves 84 having the mold resin insulators 85 of the scutum-shaped cross section, the height of the switching operating device 93 being increased in correspondence with the height of the mold resin insulator 85, so that it has an axial projection shape substantially the same as a general contour of the three vacuum valves 84 arranged side by side. In Fig. 30, the vacuum valve assembly 94 comprises three vacuum valves 86 having the mold resin insulators 87 of the circular column-shaped, the height of the switching operating device 94 being increased in correspondence with the height of the mold resin insulator 87, so that it has an axial projection shape substantially the same as a general contour of the three vacuum valves 86 arranged side by side.

The modifications as above described may similarly be applied to the vacuum valve assembly 57 shown in Figs. 7 and 8, the vacuum valve assembly 60 shown in Figs. 9 and 10, the vacuum valve assembly 70 shown in Figs. 17 and 18 as wll as the vacuum valve assembly 77 shown in Figs. 21 and 22.

According to the vacuum valve or the vacuum valve assembly of the present invention, the following advantageous results can be obtained:
(1) With the above objects in view, the vacuum valve of the present invention comprises the features of claim 1.
(2) The vacuum vessel may have a substantially cylindrical shape and may be coupled at one axial end thereof to the stationary side conductor and coupled at the other axial end to the insulating rod by means of bellows, and the movable side conductor may comprise an external connecting conductor extending through a circumferential wall of the vacuum vessel and a flexible conductor connected to the movable electrode.
   Therefore, a high voltage live portion of the vacuum valve is not exposed, and no malfunctioning of the circuit due to small animals or the like touching to a high voltage live portion takes place. Also, no mold frame made of an electrically insulating material is necessary and no insulating gas is required in the closure type distribution panel.
(3) According to the invention, the vacuum valve is provided with a mold resin insulator surrounding the vacuum vessel, a stationary side terminal including a stationary side terminal conductor embedded within the mold resin insulator and connected to the stationary side conductor and a movable side terminal including a movable side terminal conductor embedded within the mold resin insulator and connected to the movable side conductor. Therefore, an insulating mold frame for providing appropriate electrical insulation between the phases and poles as well as the insulation relative to the ground is not needed and the insulating gas and the hermetic vessel therefor are not necessary, enabling that the power distribution substation such as distribution board can be made small.
(4) According to the invention, the stationary side terminal and the movable side terminal each define a convex portion or a concave portion relative to an outer surface of the mold resin insulator, the convex portion and the concave portion are in an axially aligned, complementary relationship and each has a substantially truncated conical configuration including a surface shape capable of establishing an interface insulation therebetween. Therefore, the vacuum valves can be stacked and the electrical connection can be established at the same time, allowing the power distribution substation to be compact and the wiring operation easier.
(5) The mold resin insulator may have a concave portion having an inner circumferential surface surrounding the insulating rod in a spaced apart relationship. Therefore, the interface insulation can be made easy.
(6) Three of the vacuum valves may be arranged side by side in parallel to each other, and the mold resin insulator may be a single, substantially rectangular parallelopiped mold resin insulator common to the three vacuum valves. Therefore, the vacuum valve can be arranged in the three-phase-in-one type, making the number of components small, handling easier and the power distribution substation such as distribution board still smaller.
(7) The vacuum valve assembly may also comprise a vacuum valve and a switching operating device for driving the vacuum valve, the vacuum valve comprising a vacuum vessel, a stationary electrode and a movable electrode disposed within the vacuum vessel, a stationary side conductor hermetically extending through the vacuum vessel and having one end connectable at one end to an external circuit and the other end connected to the stationary electrode, a movable side conductor hermetically extending through the vacuum vessel and having one end connectable at one end to an external circuit and the other end connected to the movable electrode within the vacuum vessel to form a shunt portion, and an insulating rode hermetically extending through the vacuum vessel and having one end connected to the movable electrode within the vacuum vessel and the other end connectable externally of the vacuum vessel to a switch operating device, and the switching operating device may be connected to the insulating rod and may have a substantially rectangular parallelopiped outer shape having a projected configuration in the direction of axis of the vacuum valve substantially the same as that of the vacuum valve. Therefore, the installation into the power distribution substation is easy and the overall configuration of the vacuum valve assembly can be made compact.
(8) Three of the vacuum valve assemblies may be arranged side by side in parallel to each other, the switching operating device may be connected to the insulating rod and may have a substantially rectangular parallelopiped outer shape having a projected configuration in the direction of axis of the vacuum valve substantially the same as that of the three vacuum valves. Therefore, the overall configuration of the vacuum valve assembly can be made compact.
(9) The mold resin insulator may be a single, substantially rectangular parallelopiped mold resin insulator common to the three vacuum valves, and the switching opening device connected to the insulating rod may be substantially rectangular parallelopiped independently connected to the three vacuum valves, respectively. Therefore, the installation into the power distribution substation is easy and the overall configuration of the vacuum valve assembly can be made compact.
(10) The mold resin insulator may be a single, substantially rectangular parallelopiped mold resin insulator common to the three vacuum valves, and the switching opening device connected to each of the insulating rods may include a common, substantially rectangular parallelopiped housing. Therefore, the assembly as a whole including the switching operating device is arranged into a rectangular parallelopiped configuration, making the installation into the power distribution substation is easy and the overall configuration is compact.
(11) The switching operating device may be disposed along the vacuum valve, and the provision may be made of an inter-phase link connected between the switching operating device and the vacuum valve for transmitting a drive force from the switching operating device to the vacuum valve in each phase. Therefore, the vacuum valve, the inter-phase link and the switching operating device together define a substantially continuous outer contour to provide a vacuum valve assembly of a generally rectangular prallelopiped configuration, the installation into the power distribution substation is easy and the overall configuration is compact.
(12) A vacuum valve assembly may further comprise a switching operating device connected to the insulating rod, a single substantially rectangular parallelopiped mold resin insulator surrounding the vacuum vessel and the switching operating device, a stationary side terminal embedded in the mold resin insulator and having a stationary side terminal conductor connected to the stationary side conductor, and a movable side terminal embedded in the mold resin insulator and connected to the movable side conductor. Therefore, the installation into the power distribution substation is easy and the overall configuration is compact.
(13) Three of the vacuum valves may be arranged side by side side by side in parallel to each other, and the mold resin insulator may be a single, substantially rectangular parallelopiped mold resin insulator common to the three vacuum valves. Therefore, the installation into the power distribution substation is easy and the overall configuration is compact.

### INDUSTRIAL APPLICABILITY

As has been described, the vacuum valve of the present invention is useful as a switchgear mounted in a power distribution substation.

## Claims

1. A vacuum valve (10, 40, 55) comprising:
a vacuum vessel (11);
a stationary electrode (20) and a movable electrode (21) disposed within said vacuum vessel;
a stationary side conductor (19) hermetically extending through said vacuum vessel and having one end connectable at one end to an external circuit and the other end connected to said stationary electrode;
a movable side conductor (31) hermetically extending through said vacuum vessel and having one end connectable at one end to an external circuit and the other end connected to said movable electrode within said vacuum vessel to form a shunt portion (24); and
an insulating rod (25) hermetically extending through said vacuum vessel and having one end connected to said movable electrode within said vacuum vessel and the other end connectable externally of said vacuum vessel to a switch operating device,
**characterized by**
further comprising a mold resin insulator (41) surrounding said vacuum vessel, a stationary side terminal (50) including a stationary side terminal conductor (43) embedded within said mold resin insulator and connected to said stationary side conductor and a movable side terminal (51) including a movable side terminal conductor (44) embedded within said mold resin insulator and connected to said movable side conductor,
wherein said stationary side terminal and said movable side terminal each define a convex portion (48) or a concave portion (46)relative to an outer surface of said mold resin insulator, said convex portion and said concave portion are in an axially aligned, complementary relationship and each has a substantially truncated conical configuration including a surface shape capable of establishing an interface insulation therebetween.

2. The vacuum valve as claimed in claim 1, wherein said vacuum vessel has a substantially cylindrical shape and is coupled at one axial end thereof to said stationary side conductor and coupled at the other axial end to said insulating rod by means of bellows (27); and wherein
said movable side conductor comprises an external connecting conductor (29) extending through a circumferential wall of said vacuum vessel and a flexible conductor (23) connected to said movable electrode.

3. The vacuum valve as claimed in claim 1, wherein said mold resin insulator has a concave portion (52) having an inner circumferential surface surrounding said insulating rod in a spaced apart relationship.

4. The vacuum valve as claimed in claim 1, wherein three of said vacuum valves are arranged side by side in parallel to each other, and said mold resin insulator is a single, substantially rectangular parallelopiped mold resin insulator (54) common to said three vacuum valves.

5. A vacuum valve assembly (57) comprising a vacuum valve as defined in claim 1 and a switching operating device (58) for driving said vacuum valve;
wherein said switching operating device is connected to said insulating rod and has a substantially rectangular parallelopiped outer shape having a projected configuration in the direction of axis of said vacuum valve substantially the same as that of said vacuum valve.

6. The vacuum valve assembly (60) as claimed in claim 5, wherein three of said vacuum valve assemblies are arranged side by side in parallel to each other, said switching operating device is connected to said insulating rod and has a substantially rectangular parallelopiped outer shape having a projected configuration in the direction of axis of said vacuum valve substantially the same as that of said three vacuum valves.

7. The vacuum valve assembly (66) as claimed in claim 6, wherein said mold resin insulator is a single, substantially rectangular parallelopiped mold resin insulator (54) common to said three vacuum valves, and said switching operating device (58) connected to said insulating rod is substantially rectangular parallelopiped independently connected to the three vacuum valves, respectively.

8. The vacuum valve assembly (68) as claimed in claim 6, wherein said mold resin insulator is a single, substantially rectangular parallelopiped mold resin insulator (54) common to said three vacuum valves, and said switching operating device (65) connected to each of said insulating rods includes a common, substantially rectangular parallelopiped housing.

9. The vacuum valve assembly (70) as claimed in claim 6, wherein said switching operating device (73) is disposed along said vacuum valve, and further comprising an inter-phase link (72) connected between said switching operating device and said vacuum valve (40) for transmitting a drive force from said switching operating device to said vacuum valve in each phase.

10. A vacuum valve assembly comprising a vacuum valve as defined in claim 1, further comprising a switching operating device connected to said insulating rod, a single substantially rectangular parallelopiped mold resin insulator (78) surrounding said vacuum vessel and said switching operating device, a stationary side terminal embedded in said mold resin insulator and having a stationary side terminal conductor connected to said stationary side conductor, and a movable side terminal embedded in said mold resin insulator and connected to said movable side conductor.

11. The vacuum valve assembly as claimed in claim 10, wherein three of said vacuum valves are arranged side by side in parallel to each other, and said mold resin insulator is a single, substantially rectangular parallelopiped mold resin insulator (81) common to said three vacuum valves.

## Patentansprüche

1. Vakuumröhre (10, 40, 55) mit:
einem Vakuumgefäß (11),
einer stationären Elektrode (20) und einer beweglichen Elektrode (21), die innerhalb des Vakuumgefäßes vorgesehen sind,
einem Leiter auf der stationären Seite (19), der sich luftdicht durch das Vakuumgefäß erstreckt und bei dem ein Ende an einem Ende mit einem externen Schaltkreis verbindbar ist und das andere Ende mit der stationären Elektrode verbunden ist,
einem Leiter (31) an der beweglichen Seite, der sich luftdicht durch das Vakuumgefäß erstreckt und ein Ende an einem Ende mit einem externen Schaltkreis verbindbar ist und das andere Ende mit der beweglichen Elektrode innerhalb des Vakuumgefäßes verbunden ist, um einen Nebenschlussabschnitt (24) zu bilden, und
einem Isolierstab (25), der sich luftdicht durch das Vakuumgefäß erstreckt und bei dem ein Ende mit der beweglichen Elektrode innerhalb des Vakuumgefäßes verbunden ist und das andere Ende außerhalb des Vakuumgefäßes mit einer Schalterbedienrichtung verbindbar ist,
**gekennzeichnet durch**,
das weitere Aufweisen eines Gussharzisolators (41), der das Vakuumgefäß umgibt, einem Anschluss an der stationären Seite (50) mit einem Anschlussleiter (43) auf der stationären Seite, der in den Gussharzisolator eingebettet ist und mit dem Leiter auf der stationären Seite verbunden ist, und einem Anschluss (51) auf der beweglichen Seite mit einem Anschlussleiter auf der beweglichen Seite (44), der in den Gussharzisolator eingebettet ist und mit dem Leiter auf der beweglichen Seite verbunden ist, bei dem der Anschluss auf der stationären Seite und der Anschluss auf der beweglichen Seite jeweils einen konvexen Abschnitt (48) oder einen konkaven Abschnitt (46) bezüglich einer äußeren Oberfläche des Gussharzisolators bilden, wobei der konvexe Abschnitt und der konkave Abschnitt in einer axial miteinander ausgerichteten komplementären Beziehung sind und jeder eine im Wesentlichen kegelstumpfförmige Konfiguration mit einer Oberflächeform aufweist, die in der Lage ist, eine Schnittstellenisolation dazwischen aufzubauen.

2. Vakuumröhre nach Anspruch 1, bei welcher das Vakuumgefäß eine im Wesentlichen zylindrische Form aufweist und an einem axialen Ende davon mit dem Leiter auf der stationären Seite verbunden ist und an dem anderen axialen Ende mit dem Isolierstab mittels von Faltenbälgen (27) gekoppelt ist und bei dem
der Leiter auf der beweglichen Seite einen externen Verbindungsleiter (29), der sich durch eine Umfangswand des Vakuumgefäßes erstreckt, und einen flexiblen Leiter (23), der mit der beweglichen Elektrode verbunden ist, aufweist.

3. Vakuumröhre nach Anspruch 1, bei welcher der Gussharzisolator einen konkaven Abschnitt (52) mit einer inneren Umfangsoberfläche, die den Isolierstab in einer voneinander beabstandeten Beziehung umgibt, aufweist.

4. Vakuumröhre nach Anspruch 1, bei welcher drei der Vakuumröhren nebeneinander parallel zueinander angeordnet sind und der Gießharzisolator ein einzelner im Wesentlichen rechteckiger parallelepipedförmiger Gießharzisolator (54) ist, welchen die drei Vakuumröhren teilen.

5. Vakuumröhrenanordnung (57) mit einer Vakuumröhre nach Anspruch 1 und einem Schaltbediengerät (58) zum Antreiben der Vakuumröhre,
bei welcher die Schaltbedieneinrichtung mit dem Isolierstab verbunden ist und eine im Wesentlichen rechteckige parallelepipede äußere Form mit einer Projektionskonfiguration in der Richtung der Achse der Vakuumröhre aufweist, die im Wesentlichen die gleiche ist wie diejenige der Vakuumröhre.

6. Vakuumröhrenanordnung (60) nach Anspruch 5, bei welcher drei der Vakuumröhrenanordnungen nebeneinander parallel zueinander angeordnet sind, wobei die Schaltbedieneinrichtung mit dem Isolierstab verbunden ist und eine im Wesentlichen rechteckige parallelepipede äußere Form mit einer projizierten Konfiguration in der Richtung der Achse der Vakuumröhre aufweist, die im Wesentlichen die gleiche ist wie diejenige der drei Vakuumröhren.

7. Vakuumröhrenanordnung (66) nach Anspruch 6, bei welcher der Gießharzisolator ein einzelner, im Wesentlichen rechteckiger parallelepipedförmiger Gießharzisolator (54) ist, welchen die drei Vakuumröhren teilen, und die Schaltbedieneinrichtung (58), die mit dem Isolierstab verbunden ist, im Wesentlichen rechteckig parallelepiped und unabhängig mit den drei Vakuumröhren jeweils verbunden ist.

8. Vakuumröhrenanordnung (68) nach Anspruch 6, bei welcher der Gießharzisolator ein einzelner, im Wesentlichen rechteckiger parallelepipedförmiger Gießharzisolator (54) ist, welchen die drei Vakuumröhren teilen, und das Schaltbediengerät (65), das mit jedem der Isolierstäbe verbunden ist, ein gemeinsames, im Wesentlichen rechteckiges parallelepipedes Gehäuse aufweist.

9. Vakuumröhrenanordnung (70) nach Anspruch 6, bei dem das Schaltbediengerät (73) entlang der Vakuumröhre vorgesehen ist, und ferner mit einem Interphasenverbinder (72), welcher zwischen dem Schaltbediengerät und der Vakuumröhre (40) verbunden ist, um eine Antriebskraft von dem Schaltbediengerät zu der Vakuumröhre in jeder Phase zu übertragen.

10. Vakuumröhrenanordnung mit einer Vakuumröhre nach Anspruch 1, ferner mit einem Schaltbediengerät, das mit dem Isolierstab verbunden ist, einem einzelnen im Wesentlichen rechteckigen parallelepipeden Gießharzisolator (78), welcher das Vakuumgefäß umgibt, und dem Schaltbediengerät, wobei ein Anschluss auf der stationären Seite im dem Gießharzisolator eingebettet ist und einen Anschlussleiter auf der stationären Seite mit dem stationären Seitenleiter verbunden ist, und ein Anschluss auf der beweglichen Seite in den Gießharzisolator eingebettet ist und mit dem Leiter auf der beweglichen Seite verbunden ist.

11. Vakuumröhrenanordnung nach Anspruch 10, bei welcher drei der Vakuumröhren nebeneinander parallel zueinander angeordnet sind, der Gießharzisolator ein einzelner, im Wesentlichen rechteckiger parallelepipeder Gießharzisolator (81) ist, welcher von den drei Vakuumröhren geteilt wird.

## Revendications

1. Ampoule à vide (10, 40, 55) comprenant :
un réservoir sous vide (11) ;
une électrode fixe (20) et une électrode mobile (21) disposées dans ledit réservoir sous vide ;
un conducteur côté fixe (19) s'étendant hermétiquement à travers ledit réservoir sous vide et ayant une extrémité qui peut être connectée à une extrémité à un circuit externe et l'autre extrémité connectée à ladite électrode fixe ;
un conducteur côté mobile (31) s'étendant hermétiquement à travers ledit réservoir sous vide et ayant une extrémité qui peut être connectée à une extrémité à un circuit externe et l'autre extrémité connectée à ladite électrode mobile dans ledit réservoir sous vide pour former une partie de dérivation (24) ; et
une tige isolante (25) s'étendant hermétiquement à travers ledit réservoir sous vide et ayant une extrémité connectée à ladite électrode mobile dans ledit réservoir sous vide et l'autre extrémité qui peut être connectée à l'extérieur dudit réservoir sous vide à un dispositif d'actionnement de commutateur,
**caractérisée en ce que**
elle comprend en outre un isolant en résine moulée (41) entourant ledit réservoir sous vide, une borne côté fixe (50) comprenant un conducteur de borne côté fixe (43) intégré dans ledit isolant en résine moulée et connecté audit conducteur côté fixe et une borne côté mobile (51) comprenant un conducteur de borne côté mobile (44) intégré dans ledit isolant en résine moulée et connecté audit conducteur côté mobile,
dans laquelle ladite borne côté fixe et ladite borne côté mobile définissent chacune une partie convexe (48) ou une partie concave (46) par rapport à une surface externe dudit isolant en résine moulée, ladite partie convexe et ladite partie concave sont dans une relation complémentaire d'alignement axial et chacune a une configuration sensiblement conique tronquée comprenant une forme de surface capable d'établir une isolation d'interface entre elles.

2. Ampoule à vide selon la revendication 1, dans laquelle ledit réservoir sous vide a une forme sensiblement cylindrique et est couplé à une extrémité axiale de celui-ci audit conducteur côté fixe et couplé à l'autre extrémité axiale à ladite tige isolante au moyen d'un soufflet (27) ; et dans laquelle
ledit conducteur côté mobile comprend un conducteur de connexion externe (29) s'étendant à travers une paroi circonférentielle dudit réservoir sous vide et un conducteur flexible (23) connecté à ladite électrode mobile.

3. Ampoule à vide selon la revendication 1, dans laquelle ledit isolant en résine moulée comporte une partie concave (52) ayant une surface circonférentielle interne entourant ladite tige isolante dans une relation d'espacement.

4. Ampoule à vide selon la revendication 1, dans laquelle trois desdites ampoules à vide sont agencées côte à côte parallèlement les unes aux autres, et ledit isolant en résine moulée est un isolant en résine moulée (54) unique sensiblement en forme de parallélépipède rectangle commun auxdites trois ampoules à vide.

5. Ensemble d'ampoule à vide (57) comprenant une ampoule à vide selon la revendication 1 et un dispositif d'actionnement de commutation (58) pour entraîner ladite ampoule à vide ;
dans lequel ledit dispositif d'actionnement de commutation (58) est connecté à ladite tige isolante et a une forme externe sensiblement en forme de parallélépipède rectangle ayant une configuration projetée dans la direction de l'axe de ladite ampoule à vide identique à celle de ladite ampoule à vide.

6. Ensemble d'ampoule à vide (60) selon la revendication 5, dans lequel trois desdits ensembles d'ampoule à vide sont agencés côte à côte parallèlement les uns aux autres, ledit dispositif d'actionnement de commutation (58) est connecté à ladite tige isolante et a une forme externe sensiblement en forme de parallélépipède rectangle ayant une configuration projetée dans la direction de l'axe de ladite ampoule à vide sensiblement identique à celle desdites trois ampoules à vide.

7. Ensemble d'ampoule à vide (66) selon la revendication 6, dans lequel ledit isolant en résine moulée est un isolant en résine moulée (54) unique sensiblement en forme de parallélépipède rectangle commun auxdites ampoules à vide, et ledit dispositif d'actionnement de commutation (58) connecté à ladite tige isolante a sensiblement la forme d'un parallélépipède rectangle connecté de manière indépendante aux trois ampoules à vide, respectivement.

8. Ensemble d'ampoule à vide (68) selon la revendication 6, dans lequel ledit isolant en résine moulée est un isolant en résine moulée (54) unique sensiblement en forme de parallélépipède rectangle commun auxdites trois ampoules à vide, et ledit dispositif d'actionnement de commutation (65) connecté à chacune desdites tiges isolantes comprend un logement commun sensiblement en forme de parallélépipède rectangle.

9. Ensemble d'ampoule à vide (70) selon la revendication 6, dans lequel ledit dispositif d'actionnement de commutation (73) est disposé le long de ladite ampoule à vide, et comprenant en outre une liaison interphase (72) connectée entre ledit dispositif d'actionnement de commutation et ladite ampoule à vide (40) pour transmettre une force d'entraînement dudit dispositif d'actionnement de commutation à ladite ampoule à vide dans chaque phase.

10. Ensemble d'ampoule à vide comprenant une ampoule à vide selon la revendication 1, comprenant en outre un dispositif d'actionnement de commutation connecté à ladite tige isolante, un isolant en résine moulée (78) unique sensiblement en forme de parallélépipède rectangle entourant ledit réservoir sous vide et ledit dispositif d'actionnement de commutation, une borne côté fixe intégrée dans ledit isolant en résine moulée et comportant un conducteur de borne côté fixe connecté audit conducteur côté fixe, et une borne côté mobile intégrée dans ledit isolant en résine moulée et connectée audit conducteur côté mobile.

11. Ensemble d'ampoule à vide selon la revendication 10, dans lequel trois desdites ampoules à vide sont agencées côte à côte parallèlement les unes aux autres, et ledit isolant en résine moulée est un isolant en résine moulée (81) unique sensiblement en forme de parallélépipède rectangle commun auxdites trois ampoules à vide.
